# EUROPÄISCHE PATENTANMELDUNG

(11) **EP 2 845 634 A1**
(43) Veröffentlichungstag der Anmeldung: **11.03.2015**
(21) Anmeldenummer: 13183679.3
(22) Anmeldetag: 10.09.2013
(51) Int. Cl.: B01D 5/00

(54) **Kopfkondensator mit Druckkammer**

(71) Anmelder: GEA Ecoflex GmbH, 47059 Duisburg (DE)
(72) Erfinder: KUKX Dirk, 40878 Ratingen (DE); LENTZ Markus, 41543 Grevenbroich (DE); MÜLLER Bernd, 40885 Ratingen (DE); ABKER Gerd, 45768 Marl (DE)
(74) Vertreter: Stenger, Watzke & Ring

(57) **Zusammenfassung**

Die Erfindung betrifft einen Kopfkondensator mit einem Plattenwärmetauscher welcher von Medien durchströmbare erste und zweite Kanäle aufweist, die für das erste Medium (M1) rohrförmig zwischen zu einem lattenpaar miteinander verbundenen Einzelplatten und für das zweite Medium (M2) wellenförmig zwischen zu einem lattenstapel miteinander verbundenen Plattenpaaren ausgebildet sind, und mit einem Kondensätorgehäuse (3), in dem der Plattenwärmetauscher (2) angeordnet ist, wobei das Kondensatorgehäuse (3) Druckkammern (4) bereitstellt, die sich über die großen Außenoberflächen des Plattenwärmetauschers (2) erstrecken und die mit den Kanälen für das erste oder das zweite Medium (M1, M2) in strömungstechnischer Verbindung stehen, wobei die Druckkammern (4) von mit dem jeweils anderen ersten oder zweiten Medium in strömungstechnischer Verbindung stehenden Fluidleitungen (5) durchgriffen sind.

## Beschreibung

Die Erfindung betrifft einen Kopfkondensator mit einem Plattenwärmetauscher.

Kopfkondensatoren sind aus dem Stand der Technik an sich bekannt, weshalb es eines gesonderten druckschriftlichen Nachweises an dieser Stelle nicht bedarf.

Kopfkondensatoren sind am Kopf, d.h. endseitig einer Kolonne montiert. Sie dienen dazu, ein die Kolonne verlassendes Gas durch die Auskondensierung eines Produkts, typischerweise Wasser zu trocknen, was mittels des vom Kopfkondensator bereitgestellten Plattenwärmetauschers geschieht. Dabei kann der Plattenwärmetauscher im Kreuzstrom, Gegenstrom oder Gleichstrom betrieben werden.

Eine typische aus dem Stand der Technik vorbekannte Kolonne stellt einen in einem Kolonnengehäuse ausgebildeten Strömungskanal bereit, wobei das Kolonnengehäuse zumeist vertikal ausgerichtet ist. Der vom Kolonnengehäuse bereitgestellte Strömungskanal wird einendseitig mit einem ersten Medium und anderendseitig mit einem zweiten Medium beaufschlagt. Innerhalb der Kolonne kommen die beiden Medien im Gegenstrom in direkten Kontakt.

Typischerweise kommen Kolonnen beispielsweise zur Erdgasreinigung zum Einsatz. In diesem Fall durchströmt die Kolonne das zu reinigende Gas von unten nach oben. Als Reinigungsmedium dient Wasser, das der Kolonne anderendseitig aufgegeben wird. Innerhalb der Kolonne kommen das zu reinigende Erdgas sowie das als Wasser dienende Reinigungsmedium in direkten Kontakt, was zu einem Ausfiltern bestimmter Bestandteile aus dem zu reinigenden Erdgas führt. Dabei durchströmt das zu reinigende Erdgas das vertikal ausgerichtete Kolonnengehäuse von unten nach oben, wohingegen das als Reinigungsmedium dienende Wasser der Kolonne von oben aufgegeben wird und das Kolonnengehäuse dementsprechend von oben nach unten durchströmt.

Nach einem Durchströmen der Kolonne gelangt das gereinigte Gas in den kopfseitig der Kolonne montierten Kopfkondensator, in dem eine Trocknung durch Auskondensation des bei der Reinigung in der Kolonne mitgerissenen Wassers stattfindet.

Es besteht ein ständiges Bestreben danach, Kopfkondensatoren bereitzustellen, die bei hoher Leistungskapazität klein und kompakt ausgebildet sind.

Aus dem Stand der Technik sind Kopfkondensatoren bekannt geworden, die über Rohrbündelwärmetauscher verfügen. Diese sind allerdings vergleichsweise ineffizient, da ein nur verminderter Wärmeübergang pro Flächeneinheit erreicht wird, was zu einer insgesamt großen Bauform führt. Um diesen Nachteil zu überwinden sind aus dem Stand der Technik ferner Kopfkondensatoren bekannt geworden, die über Plattenwärmetauscher verfügen, die spiralförmig ausgebildet sind. Gegenüber Rohrbündelwärmetauschern sind solche Plattenwärmetauscher effizienter. Gleichwohl sind sie immer noch vergleichsweise ausladend in der Bauform, weshalb auch insoweit Verbesserungen angestrebt sind.

Es ist die **Aufgabe** der Erfindung, einen Kopfkondensator vorzuschlagen, der im Vergleich zu aus dem Stand der Technik bekannten Konstruktionen bei gleichzeitiger Minimierung der Baugröße effizienter ist.

Zur **Lösung** dieser Aufgabe wird mit der Erfindung vorgeschlagen ein Kopfkondensator mit einem Plattenwärmetauscher, der von Medien durchströmbare erste und zweite Kanäle aufweist, die für das erste Medium rohrförmig zwischen zu einem Plattenpaar miteinander verbundenen Einzelplatten und für das zweite Medium wellenförmig zwischen zu einem Plattenstapel miteinander verbundenen Plattenpaaren ausgebildet sind, und mit einem Kondensatorgehäuse, in dem der Plattenwärmetauscher angeordnet ist, wobei das Kondensatorgehäuse Druckkammern bereitstellt, die sich über die großen Außenoberflächen des Plattenwärmetauschers erstrecken und mit den Kanälen für das erste oder das zweite Medium in strömungstechnischer Verbindung stehen, wobei die Druckkammern von mit dem jeweils anderen ersten oder zweiten Medium in strömungstechnischer Verbindung stehenden Fluidleitungen durchgriffen sind.

Der erfindungsgemäße Kopfkondensator verfügt über einen Plattenwärmetauscher, der über eine Rohrseite einerseits und eine Wellenseite andererseits verfügt. Dabei kann der Plattenwärmetauscher entweder mit seiner Rohrseite oder mit seiner Wellenseite an den Gasauslass der Kolonne angeschlossen sein. Es ist indes bevorzugt, die Rohrseite an die Kolonne anzuschließen, in welchem Fall das die Kolonne verlassende Gas als erstes Medium in die rohrförmigen Kanäle des Plattenwärmetauschers einströmt und dementsprechend die sich über die großen Außenoberflächen des Plattenwärmetauschers erstreckenden Druckkammern mit den Kanälen für das zweite Medium in strömungstechnischer Verbindung stehen.

Obgleich der Kopfkondensator kopfseitig der Kolonne montiert ist, wird das die Kolonne verlassende Gas nicht direkt in den Plattenwärmetauscher eingeleitet. Dies deshalb nicht, weil anfallendes Kondensat innerhalb des Plattenwärmetauschers der Schwerkraft folgend zurückströmen und damit den Eintritt von nachfolgendem Gas behindern würde. Aus diesem Grunde wird das die Kolonne verlassende Gas zunächst um den Plattenwärmetauscher herumgeführt, so dass ein Eintritt in den Plattenwärmetauscher jenseits der Kolonne von oben stattfinden kann. Zu diesem Zweck sind entsprechende Fluidleitungen vorgesehen, die die beidseitig des Plattenwärmetauschers ausgebildeten Druckkammern durchgreifen.

Der Einsatz eines mit einer Wellenseite einerseits und einer Rohrseite andererseits ausgerüsteten Plattenwärmetauschers erweist sich insbesondere aus Effizienzgründen als vorteilhaft. Dabei wird der Plattenwärmetauscher vorzugsweise wellenseitig mit einem Kühlmedium beaufschlagt, bei dem es sich beispielsweise um Wasser handeln kann. Dieses wird mit erhöhtem Druck durch den Plattenwärmetauscher geführt, was in der Konsequenz zu einem auf den Plattenwärmetauscher einwirkenden Druckunterschied führt. Dies kann in nachteiliger Weise zu einem Ausbeulen der einzelnen Platten des Wärmetauschers führen, insbesondere da die Einzelplatten nur randseitig miteinander verbunden sind. Um dies zu verhindern sind mit der erfindungsgemäßen Konstruktion Druckkammern vorgesehen, die sich über die großen Außenoberflächen des Plattenwärmetauschers erstrecken. Dabei stehen die Druckkammern in strömungstechnischer Verbindung mit denjenigen Kanälen des Plattenwärmetauschers, durch die hindurch das unter Druck stehende Kühlmittel geführt wird. Dies ist bevorzugterweise das wellenseitig in den Plattenwärmetauscher eingeführte zweite Medium, kann aber auch bei 90° versetztem Einbau des Plattenwärmetauschers das rohrseitig in diesen einströmende erste Medium sein. Von erfindungswesentlicher Bedeutung ist indes, dass es dank der erfindungsgemäß vorgesehenen Druckkammern zu einem Druckausgleich zwischen Innen- und Außendruck kommt, der Plattenkondensator mithin quasi drucklos gestellt wird und im Plattenpaket lediglich der Differenzdruck zwischen Rohr- und Wellenseite anliegt. Infolge des Druckausgleichs wird innerhalb der Druckkammern ein Stützdruck ausgebildet, der als Gegendruck auf den unter Druck stehenden Plattenwärmetauscher einwirkt.

Die erfindungsgemäße Konstruktion erweist sich im Ergebnis als in ihrer Bauform sehr kompakt. Es kann auf Druckhalteplatten und/oder dergleichen Einrichtungen zur Stabilisierung des Plattenwärmetauschers verzichtet werden beziehungsweise es können die Wanddicken und der damit einhergehende Materialersatz deutlich reduziert werden, was die Kosten senkt und zudem die Montage beziehungsweise Demontage vereinfacht. Ferner ist der Einsatz eines in seiner Wirkleistung hoch effizienten Plattenwärmetauschers möglich, so dass die kompakte Bauform bei gleichzeitiger Effizienzsteigerung erreicht ist.

Die erfindungsgemäße Ausgestaltung erweist sich darüber hinaus als sehr flexibel in ihrer Ausgestaltung. So kann der Plattenwärmetauscher einerseits so in das Kondensatorgehäuse eingesetzt sein, dass das erste Medium, das heißt das die Kolonne verlassende Medium den Plattenwärmetauscher rohrseitig durchströmt. Andererseits kann der Plattenwärmetauscher aber auch um 90° verdreht zu dieser Ausrichtung in das Kondensatorgehäuse eingesetzt sein, in welchem Fall das die Kolonne verlassende Medium wellenseitig in dem Plattenkondensator einströmt. Die mit der erfindungsgemäßen Ausgestaltung erreichte kompakte Bauform gestattet diese Flexibilität.

Der zum Einsatz kommende Plattenwärmetauscher mit seinen Wellendurchgängen einerseits und seinen Rohrdurchgängen andererseits erweist sich als äußerst effektiv in der Wärmeübertragung. Dank des mit der erfindungsgemäßen Ausgestaltung erreichten Stützdrucks kann zudem eine vergleichsweise dünne Ausgestaltung der Wandstärke der einzelnen Platten des Plattenwärmetauschers gewählt werden, die bei ca. 0,8 mm liegt. Im Ergebnis kann so eine noch weiter optimierte Wärmeübertragungsleistung bereitgestellt werden.

Gemäß einer bevorzugten Weiterbildung der Erfindung ist vorgesehen, dass die Druckkammern in Bereiche, sogenannte Druckkammerbereiche unterteilt sind. Dabei ist die Ausbildung zwei solcher Druckkammerbereiche bevorzugt. Konstruktiv kann dies beispielsweise durch Trennbleche erreicht werden, wobei je Druckkammer ein solches Trennblech vorgesehen ist, infolgedessen eine Unterteilung der jeweiligen Druckkammer in zwei Bereiche erfolgt. Die Unterteilung der Druckkammern in Druckkammerbereiche erlaubt unterschiedliche Ausführungsformen.

Gemäß einer ersten Ausführungsform ist vorgesehen, dass die Druckkammerbereiche in strömungstechnischer Verbindung stehen. Dies erfolgt bevorzugterweise mittels einer entsprechenden Umlenkung, so dass im Ergebnis eine strömungstechnische Hintereinanderschaltung der Druckkammerbereiche gegeben ist. Diese Ausführungsform ermöglicht einen Betrieb des Kopfkondensators im Kreuzgegenstrom, das heißt das durch die Druckkammern geführte Medium wird im Kreuzgegenstrom zum anderen Medium durch die Druckkammern geführt, aufgrund der Unterteilung in Bereiche umgelenkt und innerhalb der Druckkammern in entgegengesetzter Richtung wieder zurückgeführt, so dass nicht nur ein Kreuzstrom sondern ein Kreuzgegenstrom entsteht. Es ist damit eine Betriebsweise des Kopfkondensators mit deutlicher Temperaturüberschneidung zwischen heißer und kalter Seite möglich, die in einem reinen Kreuzstrom unmöglich ist.

Die Umlenkung des durch die Druckkammern geführten Mediums kann je nach Anordnung und Orientierung der Plattenpakte im Druckraum sowohl für die Rohrseite als auch für die Wellenseite vorgesehen sein. Es lässt sich damit insgesamt die effektive Temperaturdifferenz deutlich verbessern, was zu weiterer Kompaktheit im Gesamtaufbau des Kopfkondensators führt.

Gemäß einer zweiten Ausführungsform sind die Druckkammerbereiche strömungstechnisch parallel geschaltet, wobei jedem Bereich jeweils eine eigene Mediumzufuhr und eine Mediumabfuhr zugeordnet ist. Gemäß dieser Ausführungsform kann ein Betrieb des Kopfkondensators mit unterschiedlichen Kühlmedien vorgenommen werden, wobei je Druckkammerbereich ein eigenes Kühlmedium vorgesehen sein kann. Bei einer bevorzugten Unterteilung der Druckkammern in zwei Druckkammerbereiche können mithin zwei unterschiedliche Kühlmedien zum Einsatz kommen. Dabei können die unterschiedlichen Kühlmedien auf unterschiedlichen Temperaturniveaus betrieben werden, so dass sich auch gemäß dieser Ausführungsform die effektive

Temperaturdifferenz deutlich verbessern lässt.

Gemäß einer weiteren Ausführungsform ist es ebenfalls möglich, auf der Kühlseite einen Phasenwechsel zu realisieren, das heißt das kalte Medium vollständig oder teilweise zu verdampfen, während auf der heißen Seite, das aus der Kolonne austretende Medium abgekühlt oder teilweise oder vollständig kondensiert wird.

Für einen druckdichten Abschluss der Druckkammern ist konstruktiv gemäß einem weiteren Merkmal der Erfindung vorgesehen, dass die Druckkammern in Höhenrichtung ober- und unterseitig mittels entsprechender Bleche fluiddicht verschlossen sind. Diese Bleche werden von den Fluidleitungen für das jeweils andere Medium durchgriffen, wobei bevorzugterweise eine Verschweißung der Fluidleitungen mit den Abschlussblechen vorgesehen ist, womit ein fluiddichter Abschluss beziehungsweise Separierung zwischen den jeweiligen Medien gegeben ist.

Weitere Merkmale und Vorteile der Erfindung ergeben sich aus der nachfolgenden Beschreibung anhand der Figuren. Dabei zeigen:
- Fig. 1: in teilgeschnittener Seitenansicht den erfindungsgemäßen Kopfkondensator;
- Fig. 2: in teilgeschnittener Seitenansicht den erfindungsgemäßen Kopfkondensator gemäß Schnittlinie A-A nach Fig. 1;

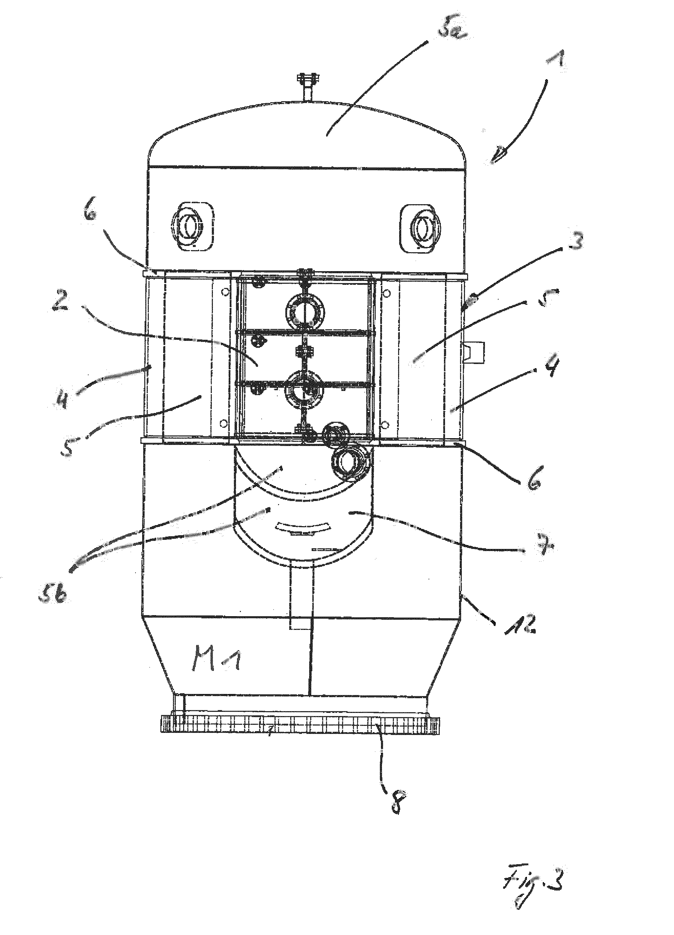

- Fig. 3: in ebenfalls teilgeschnittener Seitenansicht den erfindungsgemäßen Kopfkondensator nach Fig. 1
- Fig. 4: in geschnittener Draufsicht von oben den erfindungsgemäßen Kopfkondensator gemäß Schnittlinie B-B nach Fig. 1 und
- Fig. 5: in ebenfalls geschnittener Draufsicht von oben den erfindungsgemäßen Kopfkondensator nach Fig. 1.

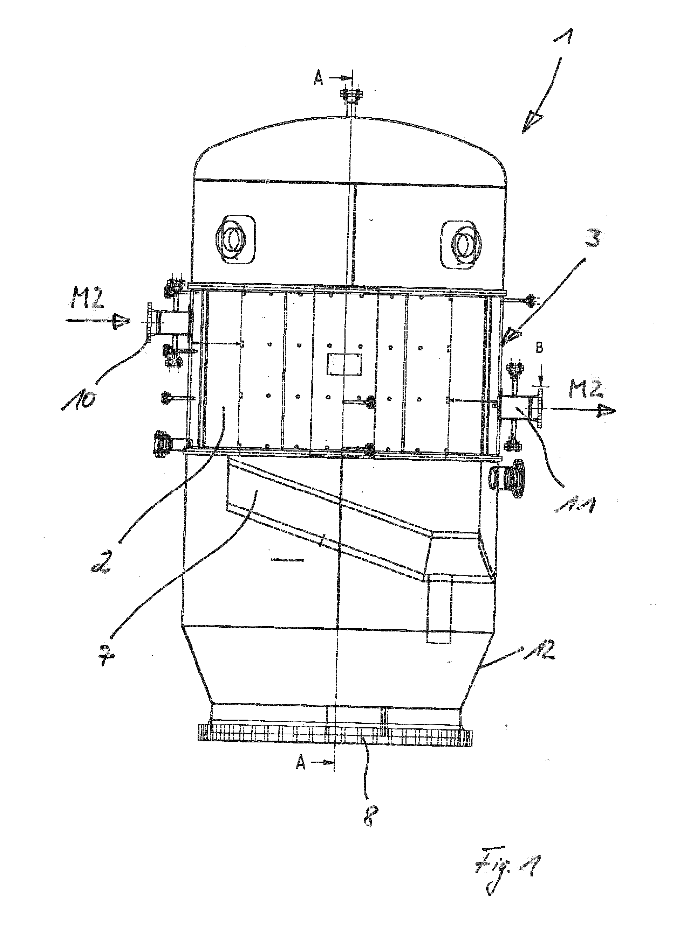

Fig. 1 lässt den erfindungsgemäßen Kopfkondensator 1 in Plattenwärmetauscher-Ausführung in einer teilgeschnittenen Seitenansicht erkennen. Dieser verfügt über ein im Querschnitt zylinderförmiges Gehäuse 3, das einen zylindrischen Mantel 12 aufweist und unterseitig mit einem Flansch 8 abschließt. Im endmontierten Zustand ist der Kopfkondensator 1 mit seinem Flansch 8 oberseitig einer in den Figuren nicht näher dargestellten Kolonne angeordnet.

Der Kopfkondensator 1 verfügt über einen Plattenwärmetauscher 2. Dieser ist innerhalb des Kondensatorgehäuses 3 angeordnet.

Der Plattenwärmetauscher 2 verfügt über von Medien durchströmbare erste und zweite Kanäle. Dabei sind die Kanäle für das erste Medium M1 rohrförmig zwischen zu einem Plattenpaar miteinander verbundenen Einzelplatten ausgebildet. Die Kanäle für das zweite Medium M2 sind wellenförmig ausgebildet und befinden sich zwischen zu einem Plattenstapel miteinander verbundenen Plattenpaaren. Die Einzelplatten sowie die Plattenpaare sind in den Figuren nicht im Einzelnen dargestellt.

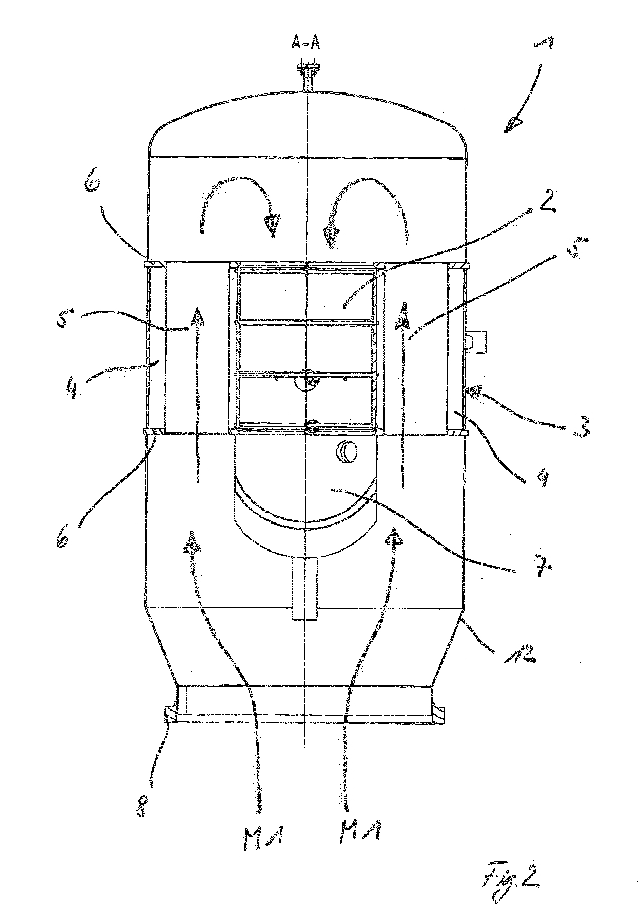

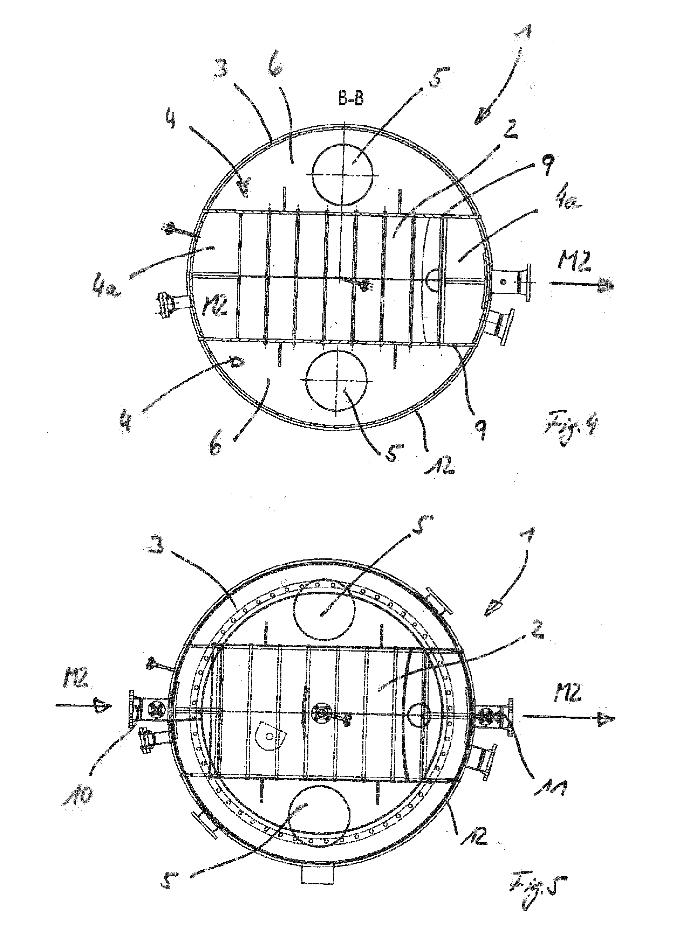

Wie insbesondere eine Zusammenschau der Figuren 2 und 4 erkennen lässt, stellt das Kondensatorgehäuse 3 zwei Druckkammern 4 bereit, die sich über die großen Außenoberflächen des Plattenwärmetauschers 2 erstrecken. Mit Bezug auf die Zeichnungsebene nach Fig. 2 befindet sich eine erste Druckkammer 4 linksseitig des Plattenwärmetauschers 2 und eine zweite Druckkammer 4 rechtsseitig des Plattenwärmetauschers 2. Wie in diesem Zusammenhang insbesondere Fig. 4 erkennen lässt, entstehen die Druckkammern 4 dadurch, dass innerhalb des Kondensatorgehäuses 3 Wandungen bildende Bleche 9 eingesetzt sind, die den vom Kondensatorgehäuse 3 bereitgestellten Volumenraum in Einbauhöhe des Plattenwärmetauscher 2 in einen Einbauraum 4a für den Plattenwärmetauscher 2 einerseits und zwei hierzu benachbarte Druckkammern 4 andererseits unterteilen, wobei die Druckkammern 4 und der Einbauraum 4a im Druckausgleich stehen. In Höhenrichtung sind die Druckkammer 4 ober- und unterseitig mittels entsprechender Bleche 6 fluiddicht verschlossen. Es entstehen so insgesamt Druckkammern 4, die jeweils benachbart zum Plattenwärmetauscher 2 ausgebildet sind und im Querschnitt eine teilkreisförmige Ausgestaltung aufweisen, welcher Sachzusammenhang sich insbesondere aus der Darstellung nach Fig. 4 ergibt.

Die Druckkammern 4 sind an eine Mediumzufuhr sowie an eine Mediumabfuhr angeschlossen, zu welchem Zweck entsprechende Anschlussflansche 10 und 11 vorgesehen sind.

Im gezeigten Ausführungsbeispiel ist der Plattenwärmetauscher 2 zu einer in den Figuren nicht näher dargestellten Kolonne rohrseitig ausgerichtet. Das über die Anschlussflansche 10 und 11 geführte Medium M2 wird mithin wellenseitig des Plattenwärmetauschers 2 durch diesen hindurchgeführt. Dabei strömt das zweite Medium M2 in Entsprechung der Darstellung nach Fig. 1 über den Anschlussflansch 10 in die erste Druckkammer 4 ein, passiert alsdann den Plattenwärmetauscher 2 wellenseitig und tritt über die sich daran anschließende zweite Druckkammer 4 über den Anschlussstutzen 11 aus dem Kopfkondensator 1 wieder aus.

Wie insbesondere eine Zusammenschau der Figuren 2 und 4 erkennen lässt, sind die Druckkammern 4 in Höhenrichtung jeweils von einer Fluidleitung 5 durchgriffen, welche im gezeigten Ausführungsbeispiel als Rohrstutzen vorliegen. Im bestimmungsgemäßen Verwendungsfall gelangt das aus einer Kolonne stammende erste Medium M1 in Entsprechung der in Fig. 2 eingezeichneten Pfeile in den Kopfkondensator 1 ein. Es durchströmt dabei den in Höhenrichtung unterhalb des Plattenwärmetauschers 2 ausgebildeten Volumenraum 5a, durchströmt die die Druckkammern 4 durchgreifenden Fluidleitungen 5 und wird so in einen mit Bezug auf die Höhenrichtung des Kopfkondensators 1 oberhalb des Plattenwärmetauschers 2 befindlichen Volumenraum 5a geleitet. Von hier aus tritt das erste Medium M1 in Entsprechung der in Fig. 2 eingezeichneten Pfeil rohrseitig in den Plattenwärmetauscher 2 ein.

In Höhenrichtung unterhalb des Plattenwärmetauschers 2 ist eine Auffangrinne 7 für im Betriebsfall entstehendes Kondensat vorgesehen. Diese tropft aus dem Plattenwärmetauscher 2 ab, wird von einem Kondensatauffang 5b der Auffangrinne 7 aufgefangen und alsdann abtransportiert.

Die Funktionsweise des erfindungsgemäßen Kopfkondensators 1 ist die folgende:
Das ein Kolonne verlassende, heiße Gas wird als erstes Medium M1 in den Kopfkondensator 1 eingeführt, und zwar in Entsprechung der in Fig. 2 eingezeichneten Pfeile. Mittels der erfindungsgemäß vorgesehenen Fluidleitungen 5 wird das Medium M1 um den Plattenwärmetauscher 2 herumgeführt und von oben in diesen eingeleitet.

Im Kreuzstrom wird als zweites Medium M2 ein Kühlmedium geführt. Dieses gelangt über den Anschlussflansch 10 in die kondensatorseitig bereitgestellte erste Druckkammer 4. Es wird von dort aus über die Wellenseite des Plattenwärmetauschers 2 geführt und gelangt alsdann in die auf der anderen Seite des Plattenwärmetauschers 2 vorgesehene Druckkammer 4. Von hier aus erfolgt dann über den Anschlussstutzen 11 eine Abführung des zweiten Mediums M2.

Infolge der vorbeschriebenen Mediumdurchführung durch den Plattenwärmetauscher 2 kommt es zu einem Abkühlen des ersten Medium M1 innerhalb des Plattenwärmetauschers 2 und einer damit einhergehenden Auskondensation. Das anfallendes Kondensat tropft der Schwerkraft folgend in Höhenrichtung des Kopfkondensators 1 nach unten aus dem Plattenwärmetauscher 2 heraus, und wird nach einem Verlassen des Plattenwärmetauschers 2 von der Auffangrinne 7 aufgefangen und abtransportiert.

Von besonderem Vorteil der vorbeschriebenen Konstruktion ist es, dass als Wärmetauscher ein Plattenwärmetauscher 2 zum Einsatz kommen kann, der anders als vorbekannte Rohrbündelwärmetauscher und/oder Spiralplattenwärmetauscher sehr viel energieeffizienter ist. Dabei wird der Einsatz eines vorbeschriebenen Plattenwärmetauschers 2 aufgrund der erfindungsgemäß vorgesehenen Druckkammern 4 möglich. Diese bewirken einen Druckausgleich zwischen Innen- und Außendruck, womit der Plattenkondensator 2 mithin quasi drucklos gestellt wird und sich im Plattenpaket lediglich der Differenzdruck zwischen Rohr- und Wellenseite einstellt. Es ergibt sich infolgedessen im Ergebnis eine sehr kompakte Bauform. Es kann auf Druckhalteplatten und/oder dergleichen Einrichtungen zur Stabilisierung des Plattenwärmetauschers verzichtet werden beziehungsweise es können die Wanddicken und der damit einhergehende Materialeinsatz deutlich reduziert werden, was einerseits die Kosten senkt und andererseits eine vereinfachte Montage beziehungsweise Demontage gestattet. Dabei ist es je nach gewünschter Konfiguration möglich, den Plattenwärmetauscher entweder rohrseitig oder auch wellenseitig an eine Kolonne anzukoppeln.

Die Druckkammern 4 und der Raum 4a stehen im Druckausgleich und befinden sich auf der Höhe des Plattenwärmetauschers 2. Nur der Druckraum 4a ist strömungstechnisch relevant und kann mit Umlenkblechen ausgerüstet werden. Durch den Druckausgleich zwischen den Druckkammern 4 und 4a ergibt sich eine gleichmäßige Druckbelastung auf den zylindrischen Mantel 12 bzw. das Plattenpaket des Plattenwärmetauschers 2 wird lediglich auf Differenzdruck belastet. Damit befindet sich Medium M2 im Druckraum 4a und in dem durch Druckausgleich verbundenen Totraum 4. Das aus der Kollone strömende Medium M1 befindet sich in den Druckräumen 5a ober- und unterhalb des Plattenwärmetauschers 2 im Kondensatauffang 5b und in der beschriebenen Fluidleitung 5.

Die Druckkammern 4 können gemäß einer alternativen Ausführungsform mittels entsprechender Trennbleche in einzelne Druckkammerbereiche unterteilt sein. Dabei können diese Bereiche gemäß einer ersten Alternative fluidtechnisch miteinander verbunden sein oder gemäß einer zweiten Alternative strömungstechnisch voneinander entkoppelt, das heißt parallel geschaltet sein. Gemäß der ersten Alternative kann durch entsprechende Umlenkungen eine Mehrfachhindurchführung des Kühlmediums realisiert werden, so dass sich im bestimmungsgemäßen Verwendungsfall ein Kreuzgegenstrom anstelle eines einfachen Kreuzstroms einstellt. Gemäß zweiter Alternative können voneinander separierte Kühlmedien eingesetzt werden, das heißt zwei oder mehr zweite Medien M2, wobei sich diese Medien hinsichtlich Aggregatzustand und/oder Temperatur voneinander unterscheiden können.

Beide vorbeschriebenen Alternativen gestatten es, effektivere Temperaturdifferenzen auszubilden und/oder unterschiedliche Temperaturniveaus einzustellen, so dass mit dem Ergebnis einer Effizienzsteigerung deutlichere Temperaturüberschneidungen zwischen heißer und kalter Seite eingestellt werden können.

### Bezugszeichenliste

- 1: Kopfkondensator
- 2: Plattenwärmetauscher
- 3: Kondensatorgehäuse
- 4: Druckkammer
- 4a: Einbauraum
- 5: Fluidleitung
- 5a: Volumenraum
- 5b: Kondensatauffang
- 6: Blech
- 7: Auffangringe
- 8: Flansch
- 9: Blech
- 10: Anschlussflansch
- 11: Anschlussflansch

## Patentansprüche

1. Kopfkondensator mit einem Plattenwärmetauscher (2), der von Medien durchströmbare erste und zweite Kanäle aufweist, die für das erste Medium (M1) rohrförmig zwischen zu einem Plattenpaar miteinander verbundenen Einzelplatten und für das zweite Medium (M2) wellenförmig zwischen zu einem Plattenstapel miteinander verbundenen Plattenpaaren ausgebildet sind, und mit einem Kondensatorgehäuse (3), in dem der Plattenwärmetauscher (2) angeordnet ist, wobei das Kondensatorgehäuse (3) Druckkammern (4) bereitstellt, die sich über die großen Außenoberflächen des Plattenwärmetauschers (2) erstrecken und die mit den Kanälen für das erste oder das zweite Medium (M1, M2) in strömungstechnischer Verbindung stehen, wobei die Druckkammern (4) von mit dem jeweils anderen ersten oder zweiten Medium in strömungstechnischer Verbindung stehenden Fluidleitungen (5) durchgriffen sind.

2. Kopfkondensator nach Anspruch 1, **dadurch gekennzeichnet, dass** die Druckkammer (4) in vorzugsweise zwei Bereiche unterteilt ist, zu welchem Zweck ein Trennblech vorgesehen ist.

3. Kopfkondensator nach Anspruch 2, **dadurch gekennzeichnet, dass** die Druckkammerbereiche in strömungstechnischer Verbindung stehen.

4. Kopfkondensator nach Anspruch 1, **dadurch gekennzeichnet, dass** die Druckkammerbereiche mittels einer Umlenkung strömungstechnisch gekoppelt sind.

5. Kopfkondensator nach einem der vorhergehenden Ansprüche, **dadurch gekennzeichnet, dass** dieser im Kreuzgegenstrom betreibbar ist.

6. Kopfkondensator nach Anspruch 2, **dadurch gekennzeichnet, dass** die Druckkammerbereiche strömungstechnisch parallel geschaltet sind.

7. Kopfkondensator nach Anspruch 6, **dadurch gekennzeichnet, dass** die Druckkammerbereiche jeweils an eine Mediumzufuhr und an eine Mediumabfuhr angeschlossen sind.

8. Kopfkondensator nach einem der vorhergehenden Ansprüche, **dadurch gekennzeichnet, dass** die Druckkammern (4) in Höhenrichtung ober- und unterseitig mittels entsprechender Bleche fluiddicht verschlossen sind.
